# EUROPEAN PATENT SPECIFICATION

(11) **EP 4 471 455 B1**
(45) Date of publication and mention of the grant of the patent: **24.12.2025**
(21) Application number: 23176715.3
(22) Date of filing: 01.06.2023
(51) Int. Cl.: G01S 13/34, G01S 13/58, G01S 13/931

(54) **SYNCHRONIZATION OF A RECEIVER UNIT AND A TRANSMITTER UNIT IN A RADAR TRANSCEIVER ARRANGEMENT**
SYNCHRONISATION EINER EMPFANGSEINHEIT UND EINER SENDEEINHEIT IN EINER RADAR-TRANSCEIVER-ANORDNUNG
SYNCHRONISATION D'UNE UNITÉ DE RÉCEPTION ET D'UNE UNITÉ D'ÉMISSION DANS UN AGENCEMENT D'ÉMISSION-RÉCEPTION RADAR

(43) Date of publication of application: 04.12.2024
(73) Proprietor: Magna Electronics Sweden AB, 447 37 Vårgårda (SE)
(72) Inventor: Pettersson, Victor, 447 37 Vårgårda (SE)
(74) Representative: Westpatent AB

(56) References cited:
- EP-A1- 3 056 920
- EP-A1- 3 748 997

## Description

The present disclosure relates to synchronization of a receiver unit and a transmitter unit in a radar transceiver arrangement.

A radar transceiver is a device arranged for transmission and reception of radar signals in a radar frequency band. Radar transceivers are commonly used in vehicles for monitoring vehicle surroundings. Automatic Cruise Control (ACC) functions, Emergency Braking (EB) functions, Advanced Driver Assistance Systems (ADAS) and Autonomous Drive (AD) are some examples of applications where radar data represents an important source of information on which vehicle control is based.

A well-known type of radar transmission format is the frequency modulated continuous wave (FMCW) format. This type of radar waveform comprises a 'chirp' signal of linearly increasing or decreasing frequency. Typically, an FMCW radar transceiver transmits multiple consecutive chirps in a saw-tooth like pattern, where the down-mixed return signal from a target will be processed with a two-dimensional (2D) fast Fourier transform (FFT) to create a matrix of complex amplitudes where each matrix element corresponds to a given range and target speed, or Doppler frequency shift.

By identifying local maxima in this matrix above a defined threshold, detections can be extracted from this matrix, each with an associated range and speed. This is normally referred to as the detection phase and is then followed by the angle of arrival estimation phase, where the phases of the receiver antennas are processed. An FMCW radar transceiver normally operates in cycles, where each cycle comprises a detection phase.

The benefits of using FMCW radar waveforms are well known for automotive radar systems. An FMCW-based radar transceiver can cost efficiently support wide band performance, such as 1GHz sweeps, to deliver the capability to resolve two targets that are only on the order of 20cm in radial separation. The 77GHz radar band provides a worldwide 1GHz bandwidth allocation for such radar systems, which is an advantage when it comes to production volumes. FMCW radar transceivers also normally produce highly constrained frequency spectra, allowing efficient use of the available bandwidth, which is a further advantage. There are similar waveforms where the above also is applicable, for example SFCW, Stepped Frequency Continuous Wave. FMCW-based radar transceivers are disclosed in EP 3 748 997 A1 and EP 3 056 920 A1.

As mentioned, the transmitted signal consists of multiple consecutive chirps and the return signal of each chirp is sampled by an analogue to digital converter. To achieve an accurate measurement, it is important that each digital sample can be associated with its corresponding chirp.

This requires that a radar transmitter and a radar receiver are fully synchronized. Here, fully synchronized means that
a) the transmitter and the receiver operate on a common smallest time-base, and that
b) the receiver knows what digital samples can be associated with the very beginning and end of each chirp produced by the transmitter such that the overall, repeated structure can be inferred.

Regarding (b), this need can for example be addressed by means of an additional synchronization/triggering signal in hardware, but there is a desire to reduce the complexity in radar hardware.

It is therefore an object of the present disclosure to provide a radar transceiver arrangement where the receiver and transmitter of a radar system are sufficiently synchronized according to the above.

This object is obtained by means of a radar transceiver arrangement comprising a control unit, a transmitter unit and a receiver unit. The transmitter unit is adapted to generate and transmit a radar signal comprising a plurality of subsequent radar waveforms with a delay time between each radar waveform. The receiver unit is adapted to receive reflected radar signals. For at least a subset of the transmitted radar waveforms, the radar transceiver arrangement is adapted to generate and transmit a predetermined binary code within each delay time, the binary code being comprised in the transmitted radar signal.

This enables the radar transceiver arrangement to determine which digital samples that can be associated with the very beginning and end of each transmitted radar waveforms produced by the transmitter unit such that the overall, repeated structure can be inferred.

Furthermore, the transmitter unit comprises a ramp generator unit adapted to generate the ramps, and a code generator unit adapted to generate the binary code. The receiver unit comprises a mixer unit adapted to mix the transmitted radar signal with the received radar signal and to output an analogue intermediate frequency, IF, signal. The receiver unit further comprises an analogue to digital converter, ADC, unit adapted to output a digital IF signal, a correlation unit, and a re-sampling unit.

The correlation unit is adapted to perform a correlation calculation between the digital IF signal and the original binary code provided by the code generator unit such that a correlation function is obtained. The correlation unit is adapted to separate the signal part comprising the binary code from the signal parts comprising the ramps by means of the correlation function and to provide synchronization information regarding start times for the ramps in the transmitted radar signal and corresponding ramps in the received radar signal.

This means that at the transmitter unit, the binary code is embedded in the frequency when using BFSK. A derivation action that provides an IF code phase φ_{cIF} = φ_{cTX} - φ_{cRX}, together with waveform designs choices such as for example duration, length of the digital levels, frequency steps etc., can be viewed as turning the original BFSK into a phase modulation, BPSK, at the receiver unit. So, at the receiver unit, the sampled data can be correlated the with a BPSK version of the binary code.

According to some aspects, the radar waveforms are constituted by FMCW, Frequency Modulated Continuous Wave, ramps, where, for at least a subset of the ramps, the radar transceiver arrangement is adapted to generate and transmit the binary code in the delay time between two subsequent ramps. This means that the present disclosure is applicable for FMCW that is a well-known and widely used radar waveform.

According to some aspects, the binary code is of the type BFSK, Binary Frequency Shift Keying, where the digital signs in the binary code vary between two different frequencies in a frequency span. This means that a commonly known and easily produced digital code can be used, and where the binary code is highly suited for its purpose.

According to some aspects, the radar transceiver arrangement is adapted to perform a correlation procedure for the received radar signal and the binary code, such that a correlation function is obtained and the parts of the received radar signal that comprise the binary code can be identified.

According to some aspects, the synchronization information is output to the re-sampling unit that is adapted to provide a re-sampled digital IF signal. The re-sampled digital IF signal can be forwarded for further processing, for example to a digital signal processing (DSP) unit.

According to some aspects, the transmitter unit comprises a switch unit that is connected to a transmitter antenna arrangement. The switch unit is adapted to switch between the ramp generator unit adapted to generate the ramps, and the code generator unit adapted to generate the binary code, such that the code generator is connected to the transmitter antenna arrangement within the delay times. In this way an efficient and reliable way to embed the binary code in the transmitted radar signal is provided. The switch unit can be realized in hardware, in software, or in a combination of both, in previously known ways.

According to some aspects, the binary code is of the type BFSK, Binary Frequency Shift Keying, where the digital signs in the binary code consist of two separately identifiable binary code sequences, where the binary code sequences vary between a first set of two different frequencies in a first frequency span and a second set of two different frequencies in a second frequency span, respectively.

This is advantageous in multi-target scenarios where the power of the received binary code sequence can be drastically reduced if the resulting radar channel inhibits frequency selectivity, known as fading. In order to increase the radar transceiver arrangement's robustness to fading effects, two or more different binary code sequences can be used and each is assigned a unique modulation frequency span.

There are also disclosed herein methods and vehicles associated with the above-mentioned advantages.

### BRIEF DESCRIPTION OF THE DRAWINGS

The present disclosure will now be described more in detail with reference to the appended drawings, where:
- Figure 1: shows a schematic top view of a vehicle;
- Figure 2: shows a schematic illustration of a radar transceiver arrangement;
- Figure 3: schematically shows a transmitted radar signal;
- Figure 4: schematically shows a first example of a binary code;
- Figure 5: schematically shows a spectrum of the binary code in Figure 4**;**
- Figure 6: schematically shows a correlation function for a received radar signal and the binary code;
- Figure 7: schematically shows a digital IF signal;
- Figure 8: schematically shows a re-sampled digital IF signal;
- Figure 9: schematically shows a binary code and its phase;
- Figure 10: schematically shows a resulting binary code after mixing;
- Figure 11: is a flow chart illustrating methods;
- Figure 12: shows an example control unit;
- Figure 13: shows an example computer program product; and
- Figure 14: schematically shows a second example of a binary code.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art.

Like numbers refer to like elements throughout the description. Any step or feature illustrated by dashed lines should be regarded as optional.

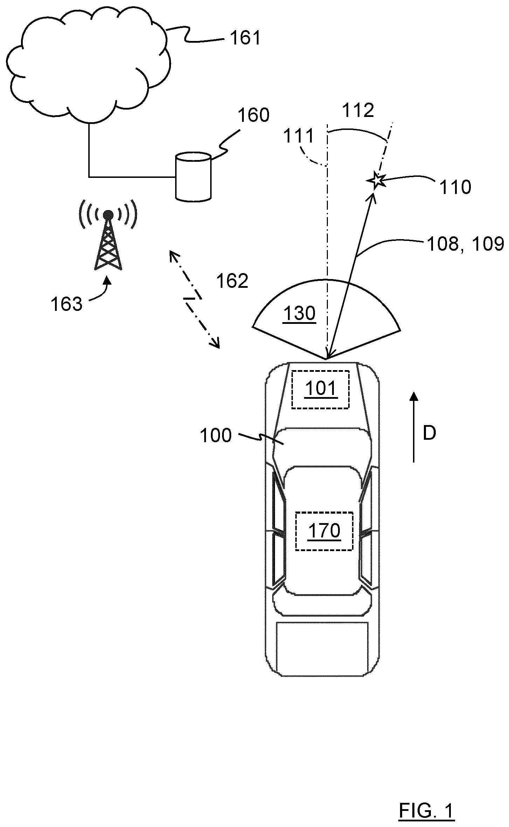

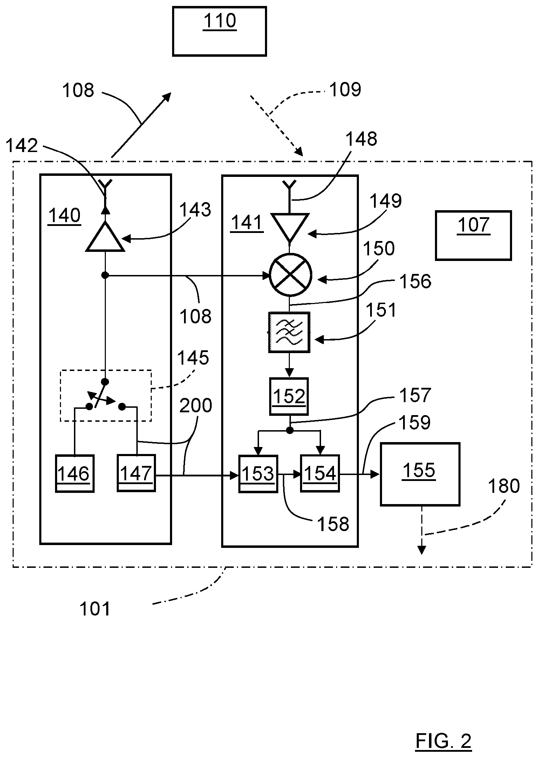

Figure 1 shows a vehicle 100 equipped with a vehicle radar transceiver arrangement 101. With reference also to Figure 2 and Figure 2, the transceiver arrangement 101 comprises a control unit 107, a transmitter unit 140 and a receiver unit 141, where the transmitter unit 140 is adapted to generate and transmit a radar signal 108 comprising a plurality of subsequent radar waveforms r with a delay time t_{D} between each radar waveform **r.** The receiver unit 141 is adapted to receive reflected radar signals 109, where the transmitted signals 108 have been reflected by an object 110.

In a previously well-known manner, the transceiver arrangement 101 is normally associated with an effective field of view 130 and by means of signal processing where digital samples are determined for the received radar signals 109, range and target angle 112 relative a reference line 111, to detected objects 110 can be determined.

The transceiver arrangement 101 may according to some aspects be connected via wireless link 162 to a remote server 160, which in turn may be comprised in a cloud-based resource 161 or remote network. This server 160 and network may be configured to assist the control unit 107 in performing various operations such as radar signal processing, interference mitigation, beamforming, and the like. Some parts of the functionality of the transceiver arrangement 100 may thus be comprised in a remote server 160 or cloud-based resource 161.

For this reason, the control unit 107 may be arranged to communicate 162 with a cellular communication system 163. This communication system 163 may, e.g., be a third generation partnership program (3GPP) defined access network like the fourth generation (4G) or the fifth generation (5G) access networks. The access network may provide access to remote networks and other resources such as, e.g., the Internet 161.

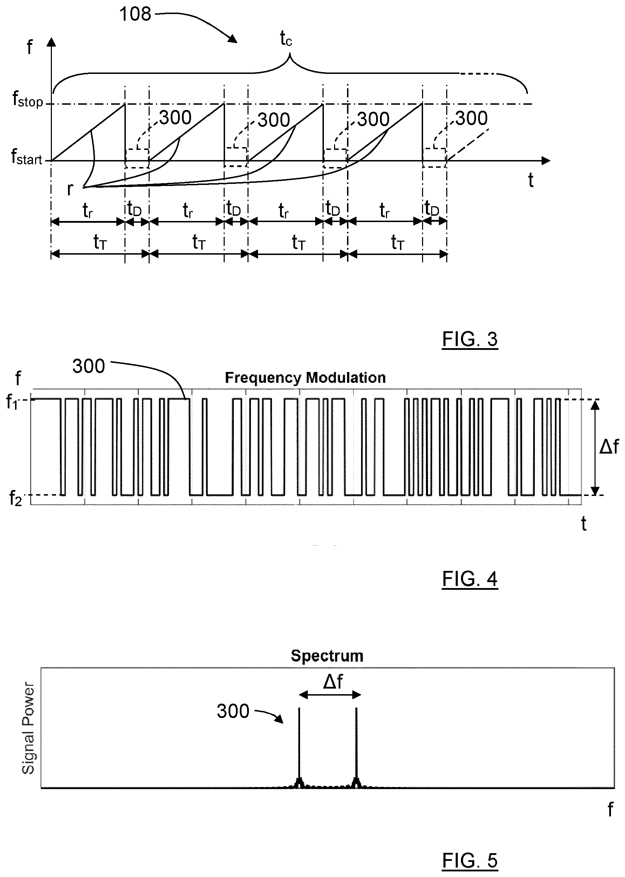

According to the present disclosure, with reference also to Figure 4 and Figure 5, for at least a subset of the transmitted radar waveforms r, the radar transceiver arrangement 101 is adapted to generate and transmit a predetermined binary code 300 within each delay time t_{D}, the binary code 300 being comprised in the transmitted radar signal 108.

This enables the radar transceiver arrangement 101 to determine which digital samples that can be associated with the very beginning and end of each transmitted radar waveforms r produced by the transmitter unit 140 such that the overall, repeated structure can be inferred. Examples of how this can be achieved practically are disclosed later.

According to some aspects, as shown in Figure 3, the radar waveforms are constituted by FMCW, Frequency Modulated Continuous Wave, ramps r, where, for at least a subset of the ramps r, the radar transceiver arrangement 101 is adapted to generate and transmit the binary code 300 in the delay time t_{D} between two subsequent ramps r. This means that the present disclosure is applicable for FMCW that is a well-known and widely used radar waveform.

It should be noted that the present disclosure is not limited to FMCW radar waveforms. Rather, the general concepts and techniques disclosed herein can be adapted and applied to other suitable radar waveforms such as for example for example SFCW, Stepped Frequency Continuous Wave ramps.

According to some aspects, as shown in Figure 4 and Figure 5, the binary code 300 is of the type BFSK, Binary Frequency Shift Keying, where the digital signs in the binary code vary between two different frequencies f₁, f₂ in a frequency span Δf. Figure 4 illustrates the binary code 300 as a function of frequency and time, and Figure 5 illustrates the binary code 300 spectrally as a functions of signal power amplitude and frequency. The binary code 300 is thus in this example represented by a BFSK modulated signal.

In this example, when it is referred to the binary code 300, it is referred to the binary code as represented by the BFSK modulated signal 300. The binary code 300 being of the type BFSK thus means that the binary code is represented by means of BFSK.

Generally, when it is referred to the binary code, it can relate to both the binary code itself and its present representation.

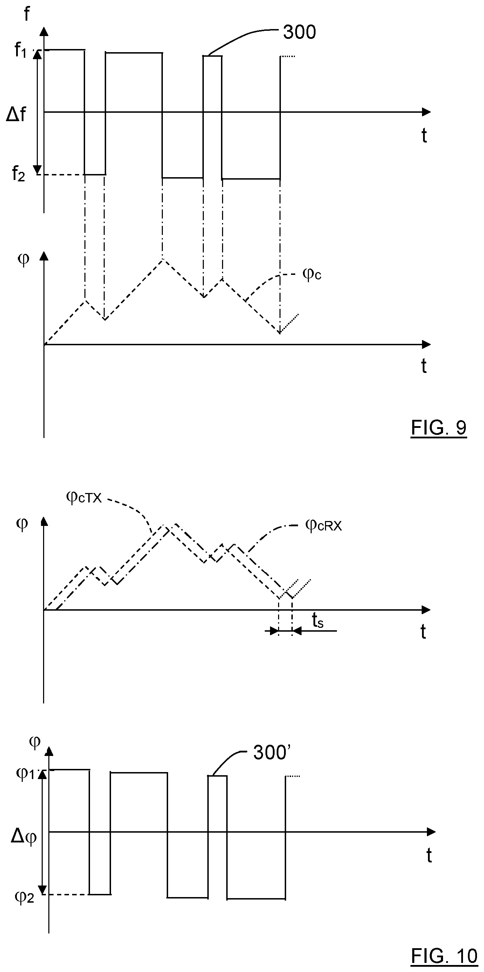

This means that a commonly known and easily produced digital code can be used, and where the binary code 300 is highly suited for its purpose. Furthermore, the phase φ_{c} of the BFSK modulated signal as a function of time corresponds to an integral of the binary code 300 as a function of time as illustrated in Figure 9. It is to be noted that the phase is a property of the BFSK modulated signal, modulated by the binary code 300, and not the binary code itself.

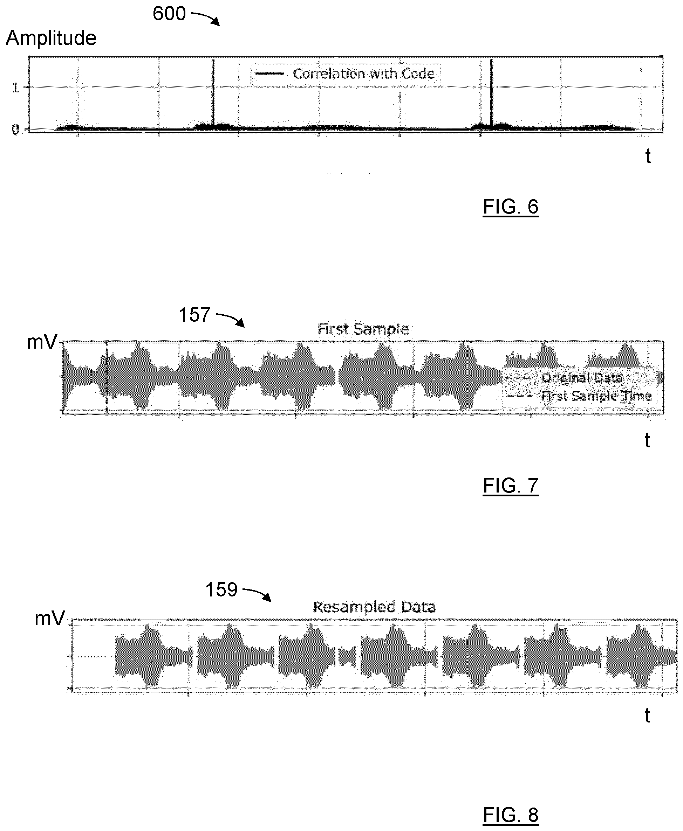

According to some aspects, as shown in Figure 6, the radar transceiver arrangement 101 is adapted to perform a correlation procedure for the received radar signal 109 and the binary code 300, such that a correlation function 600 is obtained and the parts of the received radar signal 109 that comprise the binary code 300 can be identified. An example of this, where the binary code 300 is represented by the BFSK modulated signal as described above, will be described more in detail in the following.

In accordance with the present disclosure, with reference to Figure 2 - Figure 8, the transmitter unit 140 comprises a ramp generator unit 146 adapted to generate the ramps r, and a code generator unit 147 adapted to generate the binary code 300. The receiver unit 141 comprises a mixer unit 150 adapted to mix the transmitted radar signal 108 with the received radar signal 109 and to output an analogue intermediate frequency, IF, signal 156.

After mixing, the phase φ_{IF} of the analogue IF signal 156 is a difference of the phase φ_{TX} of the transmitted radar signal 108 and the phase φ_{RX} the received radar signal 109 such that φ_{IF} = φ_{TX} - φ_{RX}. For the binary code 300 this means that the analogue IF signal 156 comprises an IF code phase φ_{cIF} that is a difference between a transmitted code phase φ_{cTX} in the transmitted signal 108 and a received code phase φ_{cRX} in the received signal 109, such that the IF code phase φ_{cIF} = φ_{cTX} - φ_{cRX}.

The transmitted code phase φ_{cTX} is proportional to the time integral of the BFSK binary code 300 in the transmitted signal 108, and the received code phase φ_{cRX}, corresponds to the transmitted code phase φ_{cTX} having been subject to a time shift tₛ, or delay, as illustrated in Figure 10, where this time shift tₛ creates the difference between the transmitted code phase φ_{cTX} and the received code phase φ_{cRX}.

This results in that the IF code phase φ_{cIF} is a derivative of the phase φ_{c} of the binary code 300, such that a corresponding binary phase code 300' is obtained, being a phase function of the received signal and varying between two phase values φ₁, φ₂ in a phase span Δφ. For binary phase code 300' the binary code is represented by a BPSK, Binary Phase Shift Keying, modulated signal.

The receiver unit 141 further comprises an analogue to digital converter, ADC, unit 152 adapted to output a digital IF signal 157 that is illustrated in Figure 7, a correlation unit 153, and a re-sampling unit 154.

The correlation unit 153 is adapted to perform a correlation calculation between the digital IF signal 157 and the original binary code 300 provided by the code generator unit 147 such that a correlation function 600 is obtained, where the correlation unit 153 is adapted to separate the signal part comprising the binary code 300 from the signal parts comprising the ramps r by means of the correlation function 600. The correlation unit 153 is further adapted to provide synchronization information 158 regarding start times for the ramps r in the transmitted radar signal 108 and corresponding ramps in the received radar signal 109.

According to some aspects, this means that at the transmitter unit 140, the binary code is embedded in the frequency using BFSK. The following derivation action providing IF code phase φ_{cIF} = φ_{cTX} - φ_{cRX}, together with waveform designs choices such as for example duration, length of the digital levels, frequency steps etc., can be viewed as turning the original BFSK into a phase modulation, BPSK, at the receiver unit 141. So, at the receiver unit 141 the sampled data is correlated the with a BPSK version of the binary code.

According to some aspects, the synchronization information 158 is output to the re-sampling unit 154 that is adapted to provide a re-sampled digital IF signal 159 where the binary code 300 has been removed, only the signal parts comprising the ramps r remaining. The re-sampled digital IF signal 159 is forwarded for further processing, for example to a digital signal processing (DSP) unit 155. An output 180 from a DSP unit 155 can for example be forwarded to a vehicle safety system, an Autonomous Drive (AD) system and the like (not shown).

According to some aspects, the transmitter unit 140 comprises a switch unit 145 that is connected to a transmitter antenna arrangement 142 and is adapted to switch between a ramp generator unit 146 adapted to generate the ramps r, anda code generator unit 147 adapted to generate the binary code 300, such that the code generator 147 is connected to the transmitter antenna arrangement 142 within the delay times t_{D}. The switch unit 145 can be realized in hardware, in software, or in a combination of both, in previously known ways.

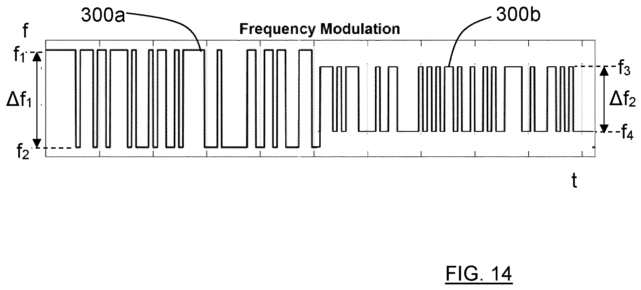

According to some aspects, with reference to Figure 14, the binary code 300a, 300b is of the type BFSK, Binary Frequency Shift Keying, where the digital signs in the binary code consists of two separately identifiable binary code sequences 300a, 300b, where the binary code sequences 300a, 300b vary between a first set of two different frequencies f₁, f₂ in a first frequency span Δf₁ and a second set of two different frequencies f₃, f₄ in a second frequency span Δf₂, respectively.

This is advantageous in multi-target scenarios where the power of the received code sequence can be drastically reduced if the resulting radar channel inhibits frequency selectivity, known as fading. In order to increase the radar transceiver arrangement's robustness to fading effects, two or more different binary code sequences can be used and each is assigned a unique modulation frequency span Δf₁, Δf₂.

At the receiver unit 141, the correlation unit 153 is arranged to combine the results of correlating the received signal with each binary code 300a, 300b. For example, the receiver unit 141 might choose to use the binary code 300a, 300b that inhibits the largest power out of all the binary codes 300a, 300b available for the resampling procedure. For a good choice of frequency span Δf₁, Δf₂, frequency diversity is achieved and the likelihood of correctly estimating the code-ramp transitions is increased.

By means of the present disclosure, complexity is moved from hardware into software and waveform generation steps, requiring no additional hardware trigger signals and receive channels.

According to some aspects, a known binary code 300 will be present in the received radar signal 109 and by modulating the frequency of a continuous wave signal using such binary codes 300 between every repetition of an FMCW waveform ramp r, a relatively low-complexity software that is one-dimensional and FFT-based can detect the binary codes 300 and then identify the start indices of each ramp r in the received radar signal 109 such that the data can be resampled before further processing. As briefly discussed above, the phase φ_{IF} of the analogue IF signal 156 mainly is proportional to the derivative of the phase φ_{TX} of the transmitted radar signal 108.

Therefore, in order to achieve a known code sequence in the analogue IF signal 156, the phase φ_{TX} of the transmitted radar signal 108 should be defined as the integral of the binary code 300. In other words, to achieve the binary code as a phase modulation in the analogue IF signal 156, the transmitted radar signal 108 should let the binary code 300 modulate its frequency.

According to some aspects, the code or chip rate is the same as the sampling rate of the ADC unit 152, but can also be equal to the sampling rate of the ADC unit 152 divided by an integer number. Keeping the code rate relatively large makes the code more easily distinguishable from the rest of the radar signal through high-pass filtering which improves performance.

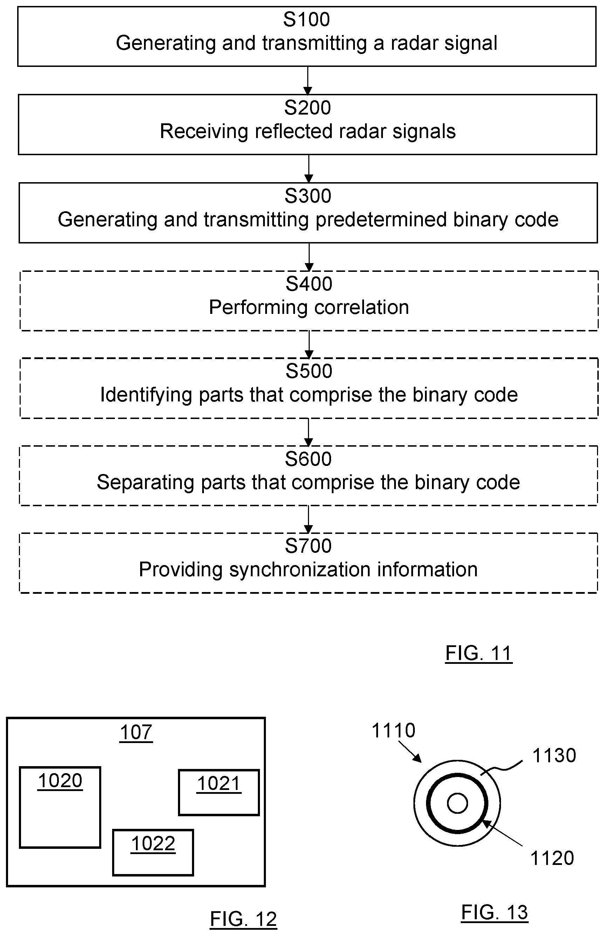

With reference to Figure 11, the present disclosure also relates to a method in a radar transceiver arrangement 101. The method comprises generating and transmitting S100 a radar signal 108 comprising a plurality of subsequent radar waveforms r with a delay time t_{D} between each radar waveform r, and receiving S200 reflected radar signals 109. For at least a subset of the transmitted radar waveforms r, the method comprises generating and transmitting S300 a predetermined binary code 300 within each delay time t_{D}, the binary code 300 being comprised in the transmitted radar signal 108.

According to some aspects, the binary code 300 is of the type BFSK, Binary Frequency Shift Keying, where the digital signs in the binary code vary between two different frequencies f₁, f₂ in a frequency span Δf.

According to some aspects, the method further comprises performing S400 a correlation procedure for the received radar signal 109 and the binary code 300, such that a correlation function 600 is obtained, and identifying S500 the parts of the received radar signal 109 that comprise the binary code 300.

According to some aspects, the method further comprises separating S600 the signal part comprising the binary code 300 from the signal parts comprising the ramps r by means of the correlation function 600. The method further comprises providing S700 synchronization information 158 regarding start times for the ramps r in the transmitted radar signal 108 and corresponding ramps in the received radar signal 109.

According to some aspects, the method further comprises providing a re-sampled digital IF signal 159.

According to some aspects, the binary code 300a, 300b is of the type BFSK, Binary Frequency Shift Keying, where the digital signs in the binary code consists of two separately identifiable code sequences 300a, 300b, where the code sequences 300a, 300b vary between a first set of two different frequencies f₁, f₂ in a first frequency span Δf₁ and a second set of two different frequencies f₃, f₄ in a second frequency span Δf₂, respectively.

With reference to Figure 2, the transceiver arrangement 101 may of course comprise other items that are obvious to the skilled person, only those necessary to explain the present disclosure have been identified and discussed. Examples of such other items are a transmitter amplifier arrangement 143, a receiver amplifier arrangement 149 and an anti-alias filter 151.

Figure 12 schematically illustrates, in terms of a number of functional units, the components of a control unit 107 according to an embodiment. The control unit 107 may be constituted by one or more processor unit parts that can be separate from each other. Although each processor unit 107 is indicated to be positioned in the vehicle 100, some processor unit parts may for example be comprised in a remote server 160 or elsewhere.

Processing circuitry 1020 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 1021. The processing circuitry 1020 may further be provided as at least one application specific integrated circuit (ASIC), or field programmable gate array (FPGA).

Particularly, the processing circuitry 1020 is configured to cause the control unit 107 to perform a set of operations, or steps. These operations, or steps, were discussed above in connection to the various vehicle radar systems and methods. For example, the storage medium 1021 may store the set of operations, and the processing circuitry 1020 may be configured to retrieve the set of operations from the storage medium 1021 to cause the control unit 107 to perform the set of operations. The set of operations may be provided as a set of executable instructions.

Thus, the processing circuitry 1020 is thereby arranged to execute methods and operations as herein disclosed.

The storage medium 1021 may also comprise persistent storage, which, for example, can be any single one or combination of magnetic memory, optical memory, solid state memory or even remotely mounted memory.

Each control unit 107 may further comprise a communications interface 1022 for communications with at least one other unit such as for example other parts in the radar transceiver units. As such, the communications interface 1022 may comprise one or more transmitters and receivers, comprising analogue and digital components and a suitable number of ports for wired or wireless communication.

The processing circuitry 1020 is adapted to control the general operation of the control unit 107 e.g., by sending data and control signals to the external unit and the storage medium 1021, by receiving data and reports from the external unit, and by retrieving data and instructions from the storage medium 1021. Other components, as well as the related functionality, of each control unit 107 are omitted in order not to obscure the concepts presented herein.

Figure 13 shows a computer program product 1110 comprising computer executable instructions 1120 arranged on a computer readable medium 1130 to execute any of the methods disclosed herein.

The present disclosure is not limited to the examples provided, but may vary freely within the scope of the appended claims. The binary code 300, 300a, 300b can for example also be regarded as a binary sequence or a binary code sequence. An example of a length of each binary code 300 is according to some aspects in the span ten microseconds to a hundred microseconds. This can depend on the sampling rate of the ADC unit 152.

According to some aspects, the integrations and derivations discussed are to be regarded as approximations and not as being mathematical exact.

## Claims

1. A radar transceiver arrangement (101) comprising a control unit (107), a transmitter unit (140) and a receiver unit (141), where the transmitter unit (140) is adapted to generate and transmit a radar signal (108) comprising a plurality of subsequent radar waveforms (r) with a delay time (t_{D}) between each radar waveform (r), and where the receiver unit (141) is adapted to receive reflected radar signals (109), where, for at least a subset of the transmitted radar waveforms (r), the radar transceiver arrangement (101) is adapted to generate and transmit a predetermined binary code (300) within each delay time (t_{D}), the binary code (300) being comprised in the transmitted radar signal (108)
where the transmitter unit (140) comprises
- a ramp generator unit (146) adapted to generate ramps (r), and
- a code generator unit (147) adapted to generate the binary code (300),
and where the receiver unit (141) comprises
- a mixer unit (150) adapted to mix the transmitted radar signal (108) with the received radar signal (109) and to output an analogue intermediate frequency, IF, signal (156),
- an analogue to digital converter, ADC, unit (152) adapted to output a digital IF signal (157),
- a correlation unit (153), and
- a re-sampling unit (154),
**characterized in that** the correlation unit (153) is adapted to perform a correlation calculation between the digital IF signal (157) and the original binary code (300) provided by the code generator unit (147) such that a correlation function (600) is obtained, where the correlation unit (153) is adapted to separate the signal part comprising the binary code (300) from the signal parts comprising the ramps (r) by means of the correlation function (600) and to provide synchronization information (158) regarding start times for the ramps (r) in the transmitted radar signal (108) and corresponding ramps in the received radar signal (109).

2. The radar transceiver arrangement (101) according to claim 1, wherein the radar waveforms are constituted by FMCW, Frequency Modulated Continuous Wave, ramps (r), where, for at least a subset of the ramps (r), the radar transceiver arrangement (101) is adapted to generate and transmit the binary code (300) in the delay time (t_{D}) between two subsequent ramps (r).

3. The radar transceiver arrangement (101) according to any one of the claims 1 or 2, wherein the binary code (300) is of the type BFSK, Binary Frequency Shift Keying, where the digital signs in the binary code vary between two different frequencies (f₁, f₂) in a frequency span (Δf).

4. The radar transceiver arrangement (101) according to any one of the previous claims, wherein the synchronization information (158) is output to the re-sampling unit (154) that is adapted to provide a re-sampled digital IF signal (159).

5. The radar transceiver arrangement (101) according to any one of the previous claims, wherein the transmitter unit (140) comprises a switch unit (145) that is connected to a transmitter antenna arrangement (142) and is adapted to switch between the ramp generator unit (146) adapted to generate the ramps (r), and the code generator unit (147) adapted to generate the binary code (300), such that the code generator (147) is connected to the transmitter antenna arrangement (142) within the delay times (t_{D}).

6. The radar transceiver arrangement (101) according to any one of the previous claims, wherein the binary code (300a, 300b) is of the type BFSK, Binary Frequency Shift Keying, where the digital signs in the binary code consists of two separately identifiable binary code sequences (300a, 300b), where the binary code sequences (300a, 300b) vary between a first set of two different frequencies (f₁, f₂) in a first frequency span (Δf₁) and a second set of two different frequencies (f₃, f₄) in a second frequency span (Δf₂), respectively.

7. A vehicle (100) comprising the radar transceiver arrangement (101) according to any previous claim.

8. A method to be executed in a radar transceiver arrangement (101),
where the method comprises
generating and transmitting (S100) a radar signal (108) comprising a plurality of subsequent radar waveforms (r) with a delay time (t_{D}) between each radar waveform (r); and
receiving (S200) reflected radar signals (109);
wherein, for at least a subset of the transmitted radar waveforms (r), the method comprises
generating and transmitting (S300) a predetermined binary code (300) within each delay time (t_{D}), the binary code (300) being comprised in the transmitted radar signal (108) where the method further comprises
- in a ramp generator unit (146) of a transmitter unit (140), generating ramps (r),
- in a code generator unit (147) of the transmitter unit (140), generating the binary code (300),
- in a mixer unit (150) of a receiver unit (141), mixing the transmitted radar signal (108) with the received radar signal (109) and outputting an analogue intermediate frequency, IF, signal (156),
- in an analogue to digital converter, ADC, unit (152) of the receiver unit (141), outputting a digital IF signal (157),
**characterized in that** the method further comprises
- in a correlation unit (153) of the receiver unit (141), performing a correlation calculation between the digital IF signal (157) and the original binary code (300) provided by the code generator unit (147) such that a correlation function (600) is obtained, and separating the signal part comprising the binary code (300) from the signal parts comprising the ramps (r) by means of the correlation function (600) and providing synchronization information (158) regarding start times for the ramps (r) in the transmitted radar signal (108) and corresponding ramps in the received radar signal (109).

9. The method according to claim 8, wherein the binary code (300) is of the type BFSK, Binary Frequency Shift Keying, where the digital signs in the binary code vary between two different frequencies (f₁, f₂) in a frequency span (Δf).

10. The method according to claim 9, wherein the method further comprises providing a re-sampled digital IF signal (159).

11. The method according to any one of the claims 8-10, wherein the binary code (300a, 300b) is of the type BFSK, Binary Frequency Shift Keying, where the digital signs in the binary code consists of two separately identifiable code sequences (300a, 300b), where the code sequences (300a, 300b) vary between a first set of two different frequencies (f₁, f₂) in a first frequency span (Δf₁) and a second set of two different frequencies (f₃, f₄) in a second frequency span (Δf₂), respectively.

## Patentansprüche

1. Radar-Transceiver-Anordnung (101), umfassend eine Steuereinheit (107), eine Sendeeinheit (140) und eine Empfangseinheit (141), wobei die Sendeeinheit (140) ausgestaltet ist, um ein Radarsignal (108) zu erzeugen und zu senden, das eine Vielzahl von aufeinanderfolgenden Radarwellenformen (r) mit einer Verzögerungszeit (t_{D}) zwischen jeder Radarwellenform (r) umfasst, wobei die Empfangseinheit (141) ausgestaltet ist, um reflektierte Radarsignale (109) zu empfangen, wobei für mindestens eine Teilmenge der gesendeten Radarwellenformen (r) die Radar-Transceiver-Anordnung (101) ausgestaltet ist, um innerhalb jeder Verzögerungszeit (t_{D}) einen vorbestimmten Binärcode (300) zu erzeugen und zu senden, wobei der Binärcode (300) im gesendeten Radarsignal (108) enthalten ist
wobei die Sendeeinheit (140) umfasst
- eine Rampengeneratoreinheit (146), die zum Erzeugen von Rampen (r) ausgestaltet ist, und
- eine Codegeneratoreinheit (147), die zum Erzeugen des Binärcodes (300) ausgestaltet ist,
und wobei die Empfangseinheit (141) umfasst
- eine Mischereinheit (150), die ausgestaltet ist, um das gesendete Radarsignal (108) mit dem empfangenen Radarsignal (109) zu mischen und ein analoges Zwischenfrequenzsignal, ZF-Signal, (156) auszugeben,
- eine Analog-Digital-Umsetzereinheit, ADU-Einheit; (152), die ausgestaltet ist, um ein digitales ZF-Signal (157) auszugeben,
- eine Korrelationseinheit (153) und
- eine Resampling-Einheit (154),
**dadurch gekennzeichnet, dass** die Korrelationseinheit (153) ausgestaltet ist, um eine Korrelationsberechnung zwischen dem digitalen ZF-Signal (157) und dem vom Codegenerator (147) bereitgestellten ursprünglichen Binärcode (300) durchzuführen, sodass eine Korrelationsfunktion (600) erhalten wird, wobei die Korrelationseinheit (153) ausgestaltet ist, um den Signalteil, der den Binärcode (300) umfasst, mittels der Korrelationsfunktion (600) von den Signalteilen, welche die Rampen (r) umfassen, zu trennen und Synchronisationsinformationen (158) über die Startzeiten der Rampen (r) im gesendeten Radarsignal (108) und entsprechende Rampen im empfangenen Radarsignal (109) bereitzustellen.

2. Radar-Transceiver-Anordnung (101) nach Anspruch 1, wobei die Radarwellenformen aus Frequency-Modulated-Continuous-Wave-Rampen, FMCW-Rampen (r), bestehen, wobei die Radar-Transceiver-Anordnung (101) für mindestens eine Teilmenge der Rampen (r) ausgestaltet ist, um den Binärcode (300) innerhalb der Verzögerungszeit (t_{D}) zwischen zwei aufeinanderfolgenden Rampen (r) zu erzeugen und zu senden.

3. Radar-Transceiver-Anordnung (101) nach einem der Ansprüche 1 oder 2, wobei der Binärcode (300) vom Typ BFSK, Binary Frequency Shift Keying, ist, wobei die digitalen Zeichen im Binärcode zwischen zwei unterschiedlichen Frequenzen (f₁, f₂) in einem Frequenzbereich (Δf) variieren.

4. Radar-Transceiver-Anordnung (101) nach einem der vorstehenden Ansprüche, wobei die Synchronisationsinformationen (158) an die Resampling-Einheit (154) ausgegeben werden, die ausgestaltet ist, um ein neu abgetastetes digitales ZF-Signal (159) bereitzustellen.

5. Radar-Transceiver-Anordnung (101) nach einem der vorstehenden Ansprüche, wobei die Sendeeinheit (140) eine Schaltereinheit (145) umfasst, die mit einer Senderantennenanordnung (142) verbunden ist und ausgestaltet ist, um zwischen der Rampengeneratoreinheit (146), die zum Erzeugen der Rampen (r) ausgestaltet ist, und der Codegeneratoreinheit (147) umzuschalten, die zum Erzeugen des Binärcodes (300) ausgestaltet ist, sodass der Codegenerator (147) innerhalb der Verzögerungszeiten (t_{D}) mit der Senderantennenanordnung (142) verbunden ist.

6. Radar-Transceiver-Anordnung (101) nach einem der vorstehenden Ansprüche, wobei der Binärcode (300a, 300b) vom Typ BFSK, Binary Frequency Shift Keying, ist, wobei die digitalen Zeichen im Binärcode aus zwei separat identifizierbaren Binärcodesequenzen (300a, 300b) bestehen, wobei die Binärcodesequenzen (300a, 300b) zwischen einem Satz von zwei unterschiedlichen Frequenzen (f₁, f₂) in einem ersten Frequenzbereich (Δf₁) bzw. einem zweiten Satz von zwei unterschiedlichen Frequenzen (f₃, f₄) in einem zweiten Frequenzbereich (Δf₂) variieren.

7. Fahrzeug (100), umfassend die Radar-Transceiver-Anordnung (101) nach einem der vorstehenden Ansprüche.

8. Verfahren, das in einer Radar-Transceiver-Anordnung (101) ausgeführt werden soll, wobei das Verfahren umfasst
Erzeugen und Senden (S100) eines Radarsignals (108), das eine Vielzahl von aufeinanderfolgender Radarwellenformen (r) mit einer Verzögerungszeit (to) zwischen jeder Radarwellenform (r) umfasst; und
Empfangen (S200) von reflektierten Radarsignalen (109); wobei das Verfahren für mindestens eine Teilmenge der gesendeten Radarwellenformen (r) umfasst
Erzeugen und Senden (S300) eines vorbestimmten Binärcodes (300) innerhalb jeder Verzögerungszeit (t_{D}), wobei der Binärcode (300) im gesendeten Radarsignal (108) enthalten ist
wobei das Verfahren ferner umfasst
- in einer Rampengeneratoreinheit (146) einer Sendeeinheit (140) das Erzeugen von Rampen (r),
- in einer Codegeneratoreinheit (147) der Sendeeinheit (140) das Erzeugen des Binärcodes (300),
- in einer Mischereinheit (150) einer Empfangseinheit (141), die das gesendete Radarsignal (108) mit dem empfangenen Radarsignal (109) mischt, das Ausgeben eines analogen Zwischenfrequenzsignals, ZF-Signals, (156),
- in einer Analog-Digital-Umsetzereinheit, ADU-Einheit, (152) der Empfangseinheit (141) das Ausgeben eines digitalen ZF-Signals (157),
**dadurch gekennzeichnet, dass** das Verfahren ferner umfasst
- in einer Korrelationseinheit (153) der Empfangseinheit (141) das Durchführen einer Korrelationsberechnung zwischen dem digitalen ZF-Signal (157) und dem von der Codegeneratoreinheit (147) bereitgestellten ursprünglichen Binärcode (300), sodass eine Korrelationsfunktion (600) erhalten wird, und das Trennen des Signalteils, der den Binärcode (300) umfasst, von den Signalteilen, welche die Rampen (r) umfassen, mittels der Korrelationsfunktion (600), und das Bereitstellen von Synchronisationsinformationen (158) über die Startzeiten der Rampen (r) im gesendeten Radarsignal (108) und entsprechender Rampen im empfangenen Radarsignal (109).

9. Verfahren nach Anspruch 8, wobei der Binärcode (300) vom Typ BFSK, Binary Frequency Shift Keying, ist, wobei die digitalen Zeichen im Binärcode zwischen zwei unterschiedlichen Frequenzen (f₁, f₂) in einem Frequenzbereich (Δf) variieren.

10. Verfahren nach Anspruch 9, wobei das Verfahren ferner das Bereitstellen eines neu abgetasteten digitalen ZF-Signals (159) umfasst.

11. Verfahren nach einem der Ansprüche 8 bis 10, wobei der Binärcode (300a, 300b) vom Typ BFSK, Binary Frequency Shift Keying, ist, wobei die digitalen Zeichen im Binärcode aus zwei separat identifizierbaren Codesequenzen (300a, 300b) bestehen, wobei die Codesequenzen (300a, 300b) zwischen einem Satz von zwei unterschiedlichen Frequenzen (f₁, f₂) in einem ersten Frequenzbereich (Δf₁) bzw. einem zweiten Satz von zwei unterschiedlichen Frequenzen (f₃, f₄) in einem zweiten Frequenzbereich (Δf₂) variieren.

## Revendications

1. Agencement émetteur-récepteur radar (101) comprenant une unité de commande (107), une unité émettrice (140) et une unité réceptrice (141), dans lequel l'unité émettrice (140) est conçue pour générer et émettre un signal radar (108) comprenant une pluralité de formes d'ondes radar (r) consécutives avec un temps de retard (t_{D}) entre chaque forme d'onde radar (r), et dans lequel l'unité réceptrice (141) est conçue pour recevoir des signaux radar (109) réfléchis, dans lequel, pour au moins un sous-ensemble des formes d'onde radar (r) émises, l'agencement émetteur-récepteur radar (101) est conçu pour générer et émettre un code binaire (300) prédéterminé à l'intérieur de chaque temps de retard (t_{D}), le code binaire (300) étant compris dans le signal radar (108) émis
dans lequel l'unité émettrice (140) comprend
- une unité de génération de rampe (146) conçue pour générer des rampes (r), et
- une unité de génération de code (147) conçue pour générer le code binaire (300),
et dans lequel l'unité réceptrice (141) comprend
- une unité de mélangeur (150) conçue pour mélanger le signal radar (108) émis avec le signal radar (109) reçu et pour délivrer en sortie un signal de fréquence intermédiaire, IF, analogique (156),
- une unité de convertisseur analogique-numérique, ADC (152) conçue pour délivrer en sortie un signal IF numérique (157),
- une unité de corrélation (153), et
- une unité de rééchantillonnage (154),
**caractérisé en ce que** l'unité de corrélation (153) est conçue pour effectuer un calcul de corrélation entre le signal IF numérique (157) et le code binaire (300) original fourni par l'unité de génération de code (147) de sorte qu'une fonction de corrélation (600) soit obtenue, dans lequel l'unité de corrélation (153) est conçue pour séparer la partie de signal comprenant le code binaire (300) des parties de signal comprenant les rampes (r) au moyen de la fonction de corrélation (600) et pour fournir des informations de synchronisation (158) concernant des heures de début des rampes (r) dans le signal radar (108) émis et des rampes correspondantes dans le signal radar (109) reçu.

2. Agencement émetteur-récepteur radar (101) selon la revendication 1, dans lequel les formes d'onde radar sont constituées de rampes (r) d'ondes entretenues modulées en fréquence, FMCW, dans lequel, pour au moins un sous-ensemble de rampes (r), l'agencement émetteur-récepteur radar (101) est conçu pour générer et émettre le code binaire (300) dans le temps de retard (t_{D}) entre deux rampes (r) consécutives.

3. Agencement émetteur-récepteur radar (101) selon l'une quelconque des revendications 1 ou 2, dans lequel le code binaire (300) est du type de modulation par déplacement de fréquence bivalente, BFSK, dans lequel les signes numériques du code binaire varient entre deux fréquences (f₁, f₂) différentes dans une gamme de fréquences (Δf).

4. Agencement émetteur-récepteur radar (101) selon l'une quelconque des revendications précédentes, dans lequel les informations de synchronisation (158) sont délivrées en sortie à l'unité de rééchantillonnage (154) qui est conçue pour fournir un signal IF numérique rééchantillonné (159).

5. Agencement émetteur-récepteur radar (101) selon l'une quelconque des revendications précédentes, dans lequel l'unité émettrice (140) comprend une unité de commutation (145) qui est connectée à un agencement d'antenne émettrice (142) et qui est conçue pour commuter entre l'unité de génération de rampe (146) conçue pour générer les rampes (r), et l'unité de génération de code (147) conçue pour générer le code binaire (300), de sorte que le générateur de code (147) soit connecté à l'agencement d'antenne émettrice (142) dans les temps de retard (t_{D}).

6. Agencement émetteur-récepteur radar (101) selon l'une quelconque des revendications précédentes, dans lequel le code binaire (300a, 300b) est du type de modulation par déplacement de fréquence bivalente, BFSK, dans lequel les signes numériques dans le code binaire sont constitués de deux séquences de code binaire (300a, 300b) identifiables séparément, dans lequel les séquences de code binaire (300a, 300b) varient entre un premier ensemble de deux fréquences (f₁, f₂) différentes dans une première gamme de fréquences (Δf₁) et un second ensemble de deux fréquences (f₃, f₄) différentes dans une seconde gamme de fréquences (Δf₂), respectivement.

7. Véhicule (100) comprenant l'agencement émetteur-récepteur radar (101) selon l'une quelconque revendication précédente.

8. Procédé à exécuter dans un agencement émetteur-récepteur radar de (101), dans lequel le procédé comprend
la génération et l'émission (S100) d'un signal radar (108) comprenant une pluralité de formes d'ondes radar (r) consécutives avec un temps de retard (t_{D}) entre chaque forme d'onde radar (r) ; et
la réception (S200) de signaux radar (109) réfléchis ; dans lequel, pour au moins un sous-ensemble des formes d'onde radar (r) émises, le procédé comprend
la génération et l'émission (S300) d'un code binaire (300) prédéterminé à l'intérieur de chaque temps de retard (t_{D}), le code binaire (300) étant compris dans le signal radar (108) émis
dans lequel le procédé comprend en outre
- dans une unité de génération de rampe (146) d'une unité émettrice (140), la génération de rampes (r),
- dans une unité de génération de code (147) de l'unité émettrice (140), la génération du code binaire (300),
- dans une unité de mélangeur (150) d'une unité réceptrice (141), le mélange du signal radar (108) émis avec le signal radar (109) reçu et la sortie d'un signal de fréquence intermédiaire, IF, analogique (156),
- dans une unité de convertisseur analogique-numérique, ADC (152) de l'unité réceptrice (141), la sortie d'un signal IF numérique (157),
**caractérisé en ce que** le procédé comprend en outre
- dans une unité de corrélation (153) de l'unité réceptrice (141), l'exécution d'un calcul de corrélation entre le signal IF numérique (157) et le code binaire (300) original fourni par l'unité de génération de code (147) de sorte qu'une fonction de corrélation (600) soit obtenue, et la séparation de la partie de signal comprenant le code binaire (300) à partir des parties de signal comprenant les rampes (r) au moyen de la fonction de corrélation (600) et la fourniture d'informations de synchronisation (158) concernant des heures de début des rampes (r) dans le signal radar (108) transmis et des rampes correspondantes dans le signal radar (109) reçu.

9. Procédé selon la revendication 8, dans lequel le code binaire (300) est du type de modulation par déplacement de fréquence bivalente, BFSK, dans lequel les signes numériques du code binaire varient entre deux fréquences (f₁, f₂) différentes dans une gamme de fréquences (Δf).

10. Procédé selon la revendication 9, dans lequel le procédé comprend en outre la fourniture d'un signal IF numérique rééchantillonné (159).

11. Procédé selon l'une quelconque des revendications 8 à 10, dans lequel le code binaire (300a, 300b) est du type de modulation par déplacement de fréquence bivalente, BFSK, dans lequel les signes numériques dans le code binaire sont constitués de deux séquences de code (300a, 300b) identifiables séparément, dans lequel les séquences de code (300a, 300b) varient entre un premier ensemble de deux fréquences (f₁, f₂) différentes dans une première gamme de fréquences (Δf₁) et un second ensemble de deux fréquences (f₃, f₄) différentes dans une seconde gamme de fréquences (Δf₂), respectivement.
